# EUROPÄISCHE PATENTSCHRIFT

(11) **EP 3 844 409 B1**
(45) Veröffentlichungstag und Bekanntmachung des Hinweises auf die Patenterteilung: **05.10.2022**
(21) Anmeldenummer: 19750106.7
(22) Anmeldetag: 01.08.2019
(51) Int. Cl.: F16C 17/03, F16C 25/02, F03D 80/70, F16C 32/06, F16C 17/06

(54) **LAGERANORDNUNG UND EINSTELLSCHRAUBE ZUR EINSTELLUNG DES LAGERSPIELS**
BEARING ARRANGEMENT AND ADJUSTING SCREW TO ADJUST THE BEARING GAP
ENSEMBLE DE PALIERS ET VIS D'AJUSTEMENT DU JEU DE PALIER

(30) Priorität: 27.08.2018 DE 102018120808
(43) Veröffentlichungstag der Anmeldung: 07.07.2021
(73) Patentinhaber: RENK GmbH, 86159 Augsburg (DE)
(72) Erfinder: ROHRMANN, Thorsten, 38271 Binder (DE); WINTER, Lutz, 30880 Laatzen (DE); DECKER, Peter, 30163 Hannover (DE)
(74) Vertreter: Wallinger Ricker Schlotter Tostmann
(86) Internationale Anmeldenummer: PCT/EP2019/070786
(87) Internationale Veröffentlichungsnummer: WO 2020/043424

(56) Entgegenhaltungen:
- EP-A1- 2 711 569
- EP-A1- 3 276 192
- WO-A2-2010/070450
- US-A1- 2017 240 389

## Beschreibung

Die Erfindung betrifft eine Lageranordnung. Des Weiteren betrifft die Erfindung eine Einstellschraube zur Einstellung des Lagerspiels.

Aus der Praxis sind Lageranordnungen mit mehreren Lagersegmenten bekannt.

Insbesondere sind Gleitlageranordnungen bekannt, die mehrere Gleitlagersegmente aufweisen. Eine solche Anordnung ist z.B aus EP 3 276 192 A1 bekannt.

Bei den Gleitlagersegmenten kann es sich um Axial-Gleitlagersegmente oder auch um Radial-Gleitlagersegmente handeln. Die Gleitlagersegmente einer Lageranordnung sind vorzugsweise am Gehäuse oder alternativ am Rotor befestigt. Jedes Gleitlagersegment verfügt über einen Gleitlagerkörper, der sich an einer Gleitfläche eines Bauteilabschnitts vorzugsweise des Rotors oder alternativ des Gehäuses abstützt. Zwischen dem Gleitlagerkörper und der Gleitfläche wird ein definiertes Lagerspiel benötigt, das bei aus der Praxis bekannten Lageranordnungen durch Montage-Shimms eingestellt werden kann. Die Einstellung des Lagerspiels über solche Montage-Shimms ist umständlich und daher zeitaufwendig. Die Lagersegmente müssen hierzu oft ein- und ausgebaut werden, um eine korrekte Stärke der Lager-Shimms zu finden. US 2017/240389 A1 offenbart einen Gleitknopf mit einstellbarer Vorrichtung um Verschleiß zu kompensieren in einem teleskopischen Arm.

Es besteht Bedarf an einer Lageranordnung, bei der das Lagerspiel einfacher eingestellt werden kann. Hiervon ausgehend liegt der vorliegenden Erfindung die Aufgabe zugrunde, eine neuartige Lageranordnung und eine Einstellschraube zur Einstellung des Lagerspiels zu schaffen.

Diese Aufgabe wird durch eine Lageranordnung nach Anspruch 1 gelöst.

Die erfindungsgemäße Lageranordnung dient zur Lagerung eines Rotors in einem feststehenden Gehäuse. Die Lageranordnung weist mehrere vorzugsweise am Gehäuse befestigte Gleitlagersegmente auf, wobei jedes Gleitlagersegment einen Gleitlagerkörper aufweist, der sich an einer Gleitfläche eines Bauteilabschnitts vorzugsweise des Rotors abstützt.

Im Bereich jedes Gleitlagersegments ist ein Lagerspiel zwischen dem jeweiligen Gleitlagerkörper und der Gleitfläche des jeweiligen Bauteilabschnitts, an welcher sich der Gleitlagerkörper abstützt, durch eine Einstellschraube einstellbar.

Die jeweilige Einstellschraube weist ein Außengewinde auf, über welches dieselbe in eine vorzugsweise gehäuseseitige Ausnehmung, die ein Innengewinde aufweist, einschraubbar ist. Die jeweilige Einstellschraube weist am Außenumfang eine Nut auf, die axial beidseitig von Abschnitten der Einstellschraube begrenzt ist.

Durch die Abschnitte der Einstellschraube, welche die Nut derselben axial begrenzen, und damit auch durch die Nut erstreckt sich mindestens eine Spannschraube, über welche die Abschnitte der Einstellschraube, welche die Nut derselben axial begrenzen, verspannbar sind, wodurch die jeweilige Einstellschraube in der jeweiligen Ausnehmung sicherbar ist.

Bei der erfindungsgemäßen Lageranordnung wird das Lagerspiel im Bereich des jeweiligen Gleitlagersegments über eine jeweilige Einstellschraube eingestellt. Über die mindestens eine Spannschraube kann die jeweilige Einstellschraube verspannt und so gesichert werden. Es ist eine einfache Einstellung des Lagerspiels innerhalb kurzer Zeit, ohne die Notwendigkeit, Lagerkörper mehrfach ein- und ausbauen zu müssen, möglich. Die Einstellschraube zur Einstellung des jeweiligen Lagerspiels ist in ihrer Position gesichert, und zwar über die mindestens eine mit der jeweiligen Einstellschraube zusammenwirkende Spannschraube.

Nach einer vorteilhaften Weiterbildung der Erfindung erstreckt sich die jeweilige Spanschraube durch Bohrungen in den Abschnitten der jeweiligen Einstellschraube, welche die Nut derselben axial begrenzen, wobei die Bohrung an einem der Abschnitte als gewindelose Durchgangsbohrung und die Bohrung an dem anderen der Abschnitte als Gewindebohrung ausgeführt ist. Dies erlaubt ein besonders vorteilhaftes Verspannen der jeweiligen Einstellschraube in der die jeweilige Einstellschraube aufnehmenden Ausnehmung.

Nach einer vorteilhaften Weiterbildung der Erfindung erstreckt sich die jeweilige Spannschraube durch die Abschnitte der Einstellschraube, welche die Nut derselben axial begrenzen, und im Bereich der Nut ausschließlich durch die Nut mit Abstand zu einen Nutgrund der Nut. Auch dies ist zur vorteilhaften Verspannung der jeweiligen Einstellschraube in der die jeweilige Einstellschraube aufnehmenden Ausnehmung von Vorteil.

Die erfindungsgemäße Einstellschraube zur Einstellung des Lagerspiels ist in Anspruch 6 definiert.

Bevorzugte Weiterbildungen der Erfindung ergeben sich aus den Unteransprüchen und der nachfolgenden Beschreibung.

Ausführungsbeispiele der Erfindung werden, ohne hierauf beschränkt zu sein, an Hand der Zeichnung näher erläutert. Dabei zeigt:
- Fig. 1: einen Querschnitt durch eine erfindungsgemäße Lageranordnung;

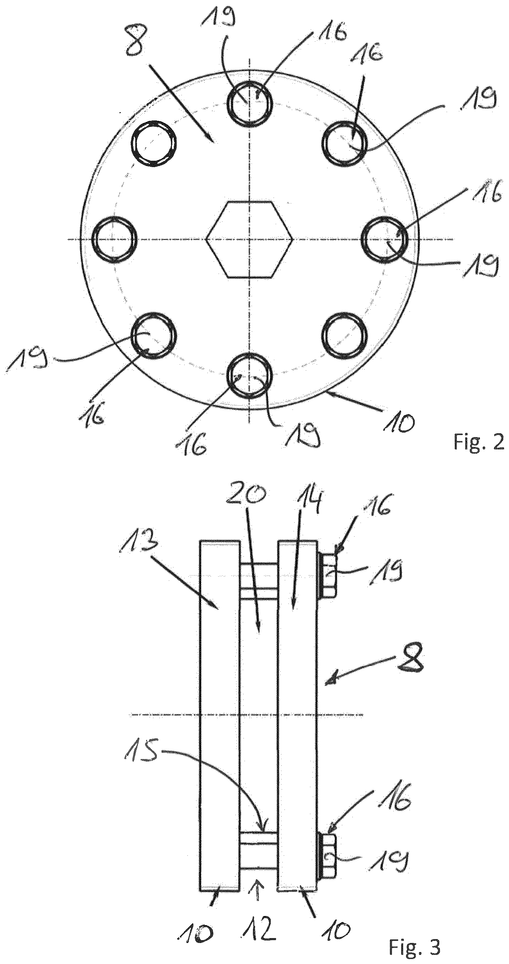

- Fig. 2: ein Detail der Lageranordnung, nämlich eine Lagerspiel-Einstellschraube, in Vorderansicht; und
- Fig. 3: das Detail der Fig. 2 in Seitenansicht.

Die Erfindung betrifft eine Lageranordnung zur Lagerung eines Rotors in einem feststehenden Gehäuse sowie eine Einstellschraube zur Einstellung des Lagerspiels.

Insbesondere dient die erfindungsgemäße Lageranordnung der Lagerung eines Rotors einer Windkraftanlage in einem feststehenden Gehäuse der Windkraftanlage, nämlich der Lagerung eines sogenannten Hauptrotors, der über die Rotorblätter der Windkraftanlage angetrieben ist.

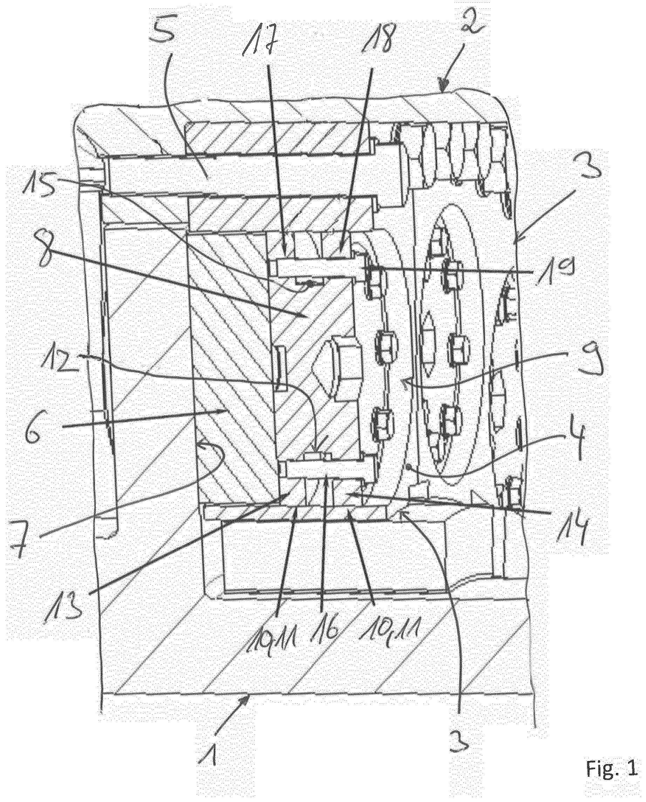

Fig. 1 zeigt einen Ausschnitt aus einer Lageranordnung, die der Lagerung eines Rotors 1 in einem Gehäuse 2 dient.

Die Lageranordnung der Fig. 1 verfügt über mehrere Gleitlagersegmente 3, die im gezeigten Ausführungsbeispiel als Axial-Gleitlagersegmente ausgeführt sind. Die Erfindung ist nicht auf Axial-Gleitlagersegmente beschränkt, sondern kann auch bei Radial-Gleitlagersegmenten zum Einsatz kommen.

Die Gleitlagersegmente 3 sind im Ausführungsbeispiel der Fig. 1 am Gehäuse 2 befestigt, es handelt sich bei den Gleitlagersegmenten 3 der Fig. 1 demnach um gehäuseseitige Gleitlagersegmente. Jedes Gleitlagersegment 3 verfügt über eine gehäuseseitige Halterung 4, die an dem Gehäuse 2 über jeweils mindestens eine Montageschraube 5 befestigt ist. Die jeweilige Halterung 4 nimmt einen Gleitlagerkörper 6 auf, der sich an einer Gleitfläche 7 des Rotors 1 abstützt.

Im Unterschied zum gezeigten Ausführungsbeispiel ist es möglich, dass es sich beim Gleitlagersegment um ein rotorseitiges Gleitlagersegment handelt, das am Rotor 1 befestigt ist, wobei sich dann der Gleitkörper des jeweiligen Gleitlagersegments an einer Gleitfläche des Gehäuses abstützt.

Für einen ordnungsgemäßen Betrieb der Lageranordnung ist es von Bedeutung, ein Lagerspiel im Bereich des jeweiligen Gleitlagersegments 3 einzustellen, wobei das Lagerspiel durch einen Abstand zwischen dem jeweiligen Gleitlagerkörper 6 und der Gleitfläche 7 bestimmt wird, auf welcher sich der Gleitlagerkörper 6 abstützt.

Zur Einstellung dieses Lagerspiels dienen Einstellschrauben 8. Im Bereich jedes Gleitlagersegments 3 ist das jeweilige Lagerspiel zwischen dem jeweiligen Gleitlagerkörper 6 und der Gleitfläche 7, an welcher sich der Gleitlagerkörper 6 abstützt, durch jeweils mindestens eine Einstellschraube 8 einstellbar.

Die jeweilige Einstellschraube 8 findet in einer jeweiligen Ausnehmung 9 der Halterung 4 des jeweiligen Gleitlagersegments 3 Aufnahme.

Die jeweilige Einstellschraube 8 verfügt dabei über ein Außengewinde 10, das mit einem Innengewinde 11 der die jeweilige Einstellschraube 8 aufnehmenden Ausnehmung 9 zusammenwirkt. Über das Zusammenspiel von Außengewinde 10 der jeweiligen Einstellschraube 8 und im Innengewinde 11 der jeweiligen Ausnehmung 9 kann die Einstellschraube 8 in die Ausnehmung 9 der Halterung 4 des jeweiligen Gleitlagersegments 3 eingeschraubt werden, um so den Abstand zwischen dem Gleitlagerkörper 6 und der Gleitfläche 7 einzustellen, an welcher sich der Gleitlagerkörper 6 abstützt.

Die jeweilige Einstellschraube 8 weist an ihrem Außenumfang eine Nut 12 auf, die axial beidseitig von gegenüber der Nut 12 radial vorstehenden Abschnitten 13, 14 der Einstellschraube 8 begrenzt ist. Im Bereich der Nut 12 ist demnach das Außengewinde 10 der Einstellschraube 8 unterbrochen. An beiden axialen Seiten ist die Nut 12 der Einstellschraube 8 von den Abschnitten 13 und 14 der Einstellschraube 8 begrenzt. Innen ist die Nut 12 der Einstellschraube 8 durch einen Nutgrund 15 derselben begrenzt.

Durch die Abschnitte 13, 14 der Einstellschraube 8, welche die Nut 12 axial begrenzen, und damit auch durch die Nut 12, erstreckt sich mindestens eine Spannschraube 16. Vorzugsweise sind je Einstellschraube 8 mindestens zwei, bevorzugt mindestens vier, besonders bevorzugt mindestens sechs, derartige Spannschrauben 16 vorhanden.

Über die Spannschrauben 16 können die Abschnitte 13, 14 der Einstellschraube 8, welche die Nut 12 derselben axial begrenzen, gegeneinander verspannt werden, wodurch dann die jeweilige Einstellschraube 8 in der jeweiligen die Einstellschraube 8 aufnehmenden Ausnehmung 9 der Halterung 4 des jeweiligen Gleitlagersegments 3, die auch den jeweiligen Gleitlagerkörper 6 aufnimmt, gesichert ist. Die jeweilige Einstellschraube 8 kann sich dann im Betrieb nicht mehr ungewollt lösen, vielmehr ist dieselbe in ihrer Position durch die Spannschrauben 16 gesichert.

Eine Längsmittelachse der Spannschrauben 16 erstreckt sich parallel zu einer Längsmittelachse der jeweiligen Einstellschraube 8. Die jeweiligen Spannschrauben 16 erstrecken sich durch Bohrungen 17, 18 in den Abschnitten 13, 14 der jeweiligen Einstellschraube 8. Bei diesen Abschnitten 13, 14 mit den Bohrungen 17, 18 handelt es sich wieder um diejenigen Abschnitte, welche die Nut 12 axial begrenzen. Die jeweilige Spannschraube 16 erstreckt sich durch diese Abschnitte 13, 14 der Einstellschraube 8, und im Bereich der Nut 12 ausschließlich durch die Nut 12 mit radialem Abstand zum Nutgrund 15 der Nut 12.

Die Bohrungen 17, 18 für die Spannschrauben 16 sind an einem der Abschnitte, und zwar im gezeigten Ausführungsbeispiel am Abschnitt 17, der Einstellschraube 8, als Gewindebohrungen und am anderen Abschnitt 14 der Einstellschraube 8 ist als gewindelose Durchgangsbohrung ausgeführt.

Die jeweilige Spannschraube 16 verfügt dann an dem Abschnitt, der sich durch die gewindelose Durchgangsbohrung erstreckt, über kein Außengewinde, sondern vielmehr verfügt die jeweilige Spannschraube 16 an demjenigen Abschnitt über ein Außengewinde, der in die Gewindebohrung eingreift. Mit einem Schraubenkopf 19 stützt sich die jeweilige Spannschraube 16 an der jeweiligen Einstellschraube 8 ab, und zwar an einer Axialfläche derselben.

Mit der Erfindung kann demnach an einer Lageranordnung mit Gleitlagersegmenten ein Lagerspiel einfach und komfortabel eingestellt werden. Hierzu kommt je Gleitlagersegment 3 mindestens eine Einstellschraube 8 zum Einsatz, die über ein Außengewinde 10 verfügt und über dieses Außengewinde 10 in eine Ausnehmung 9 in einer Halterung 4 des jeweiligen Gleitlagersegments 3 eingeschraubt werden kann, an welcher ein entsprechendes Innengewinde 11 ausgebildet ist. Die Einstellschraube 8 verfügt dabei an ihrer äußeren Umfangsfläche über die Nut 12, welche das Außengewinde 10 unterbricht, und so die beiden Abschnitte 13 und 14 ausbildet, welche die Nut 12 axial begrenzen. Innen ist die Nut 12 von einem Nutgrund 15 begrenzt. Die oder jede Spannschraube 16 dient dem Verspannen der Abschnitte 13 und 14 der Spannschraube 8, um dieselbe vor einem unbeabsichtigten Lösen zu sichern. Die jeweilige Spannschraube 16 erstreckt sich dabei ausschließlich durch die Abschnitte 13, welche die Nut 12 axial begrenzen, jedoch nicht durch einen zwischen den Abschnitten 13 positionierten mittleren Abschnitt 20 der Einstellschraube, welcher den Nutgrund 15 der Nut 12 definiert.

Zum Einstellen des Lagerspiels wird demnach die Einstellschraube 8 in eine definierte Position in die jeweilige Ausnehmung 9 der Halterung 4 des Gleitlagersegments 3 eingeschraubt. Hierbei wird das Flankenspiel des Außengewindes 10 der Einstellschraube 8 relativ zum Innengewinde 11 der Ausnehmung 9 durch Anziehen der Spannschrauben 16 vollständig eliminiert. Die Spanschrauben werden zunächst nur so weit angezogen, dass Flankenspiel eliminiert ist und die Einstellschraube 8 kann aber noch gedreht werden. So wird verhindert, dass das eingestellte Lagerspiel vom Flankenspiel beeinflusst und überlagert wird.

Durch weiteres Drehen der Einstellschraube 8 wird das Lagerspiel eingestellt. Ist das Lagerspiel eingestellt, so werden die Spannschrauben 16 mit einem definierten Nennmoment festgezogen und so die Einstellschraube 8 letztendlich in ihrer Position gesichert, sodass sich dieselbe nicht mehr drehen kann.

Würde das Flankenspiel des Gewindes 10 nicht eliminiert, so bestünde die Gefahr, dass das eingestellte Lagerspiel durch das Verspannen der Einstellschraube 8 in der Größenordnung des Flankenspiels verändert wird.

### Bezugszeichenliste

- 1: Rotor
- 2: Gehäuse
- 3: Gleitlagersegment
- 4: Halterung
- 5: Befestigungsschraube
- 6: Gleitkörper
- 7: Geitfläche
- 8: Einstellschraube
- 9: Ausnehmung
- 10: Außengewinde
- 11: Innengewinde
- 12: Nut
- 13: Abschnitt
- 14: Abschnitt
- 15: Nutgrund
- 16: Spannschraube
- 17: Bohrung
- 18: Bohrung
- 19: Schraubenkopf
- 20: Abschnitt

## Patentansprüche

1. Lageranordnung zur Lagerung eines Rotors (1) in einem feststehenden Gehäuse (2),
mit mehreren vorzugsweise am Gehäuse (2) befestigten Gleitlagersegmenten (3), wobei jedes Gleitlagersegment (3) einen Gleitlagerkörper (6) aufweist, der sich an einer Gleitfläche (7) eines Bauteilabschnitts vorzugsweise des Rotors (1) abstützt,
wobei im Bereich jedes Gleitlagersegments (3) ein Lagerspiel zwischen dem jeweiligen Gleitlagerkörper (6) und der Gleitfläche (7) des jeweiligen Bauteilabschnitts, an welcher sich der Gleitlagerkörper (6) abstützt, einstellbar ist,
**dadurch gekennzeichnet, dass** das Lagerspiel durch eine Einstellschraube einstellbar ist,
wobei die jeweilige Einstellschraube (8) ein Außengewinde (10) aufweist, über welches dieselbe in eine vorzugsweise gehäuseseitige Ausnehmung (9), die ein Innengewinde (11) aufweist, einschraubbar ist,
wobei die jeweilige Einstellschraube (8) am Außenumfang eine Nut (12) aufweist, die axial beidseitig von Abschnitten (13, 14) der Einstellschraube (8) begrenzt ist,
wobei sich durch die Abschnitte (13, 14) der Einstellschraube (8), welche die Nut (12) derselben axial begrenzen, und damit auch durch die Nut (12) mindestens eine Spannschraube (16) erstreckt, über welche die Abschnitte (13, 14) der Einstellschraube (8), welche die Nut (12) derselben axial begrenzen, verspannbar sind, wodurch die jeweilige Einstellschraube (8) in der jeweiligen Ausnehmung (9) sicherbar ist.

2. Lageranordnung nach Anspruch 1, **dadurch gekennzeichnet, dass** sich durch die Abschnitte (13, 14) der jeweiligen Einstellschraube (8), welche die Nut (12) derselben axial begrenzen, und damit auch durch die Nut (12) mehrere Spanschrauben (16) erstrecken.

3. Lageranordnung nach Anspruch 1 oder 2, **dadurch gekennzeichnet, dass** sich eine Längsmittelachse der jeweiligen Spanschraube (16) parallel zu einer Längsmittelachse der jeweiligen Einstellschraube (8) erstreckt.

4. Lageranordnung nach einem der Ansprüche 1 bis 3, **dadurch gekennzeichnet, dass** sich die jeweilige Spanschraube (16) durch Bohrungen (17, 18) in den Abschnitten (13, 14) der jeweilige Einstellschraube (8), welche die Nut (12) derselben axial begrenzen, erstreckt, wobei die Bohrung an einem der Abschnitte als gewindelose Durchgangsbohrung und die Bohrung an dem anderen der Abschnitte als Gewindebohrung ausgeführt ist.

5. Lageranordnung nach einem der Ansprüche 1 bis 4, **dadurch gekennzeichnet, dass** sich die jeweilige Spannschraube (16) durch die Abschnitte (13, 14) der Einstellschraube (8), welche die Nut (12) derselben axial begrenzen, und im Bereich der Nut (12) durch die Nut mit Abstand zu einem Nutgrund (15) der Nut (12) erstreckt.

6. Einstellschraube (8) zur Einstellung des Lagerspiels im Bereich eines Gleitlagersegments,
wobei die Einstellschraube (8) ein Außengewinde (10) aufweist,
**dadurch gekennzeichnet, dass**
die jeweilige Einstellschraube (8) am Außenumfang eine Nut (12) aufweist, die beidseitig axial von Abschnitten (13, 14) der Einstellschraube (8) begrenzt ist,
wobei sich durch die Abschnitte (13, 14) der Einstellschraube (8), welche die Nut (12) derselben axial begrenzen, und damit auch durch die Nut (12) mindestens eine Spannschraube (16) erstreckt, über welche die Abschnitte (13, 14) der Einstellschraube (8), welche die Nut (12) derselben axial begrenzen, verspannbar sind.

7. Einstellschraube nach Anspruch 6, **dadurch gekennzeichnet, dass** sich durch die Abschnitte (13, 14) der Einstellschraube (8), welche die Nut (12) derselben axial begrenzen, und damit auch durch die Nut (12) mehrere Spanschrauben (16) erstrecken.

8. Einstellschraube nach Anspruch 6 oder 7, **dadurch gekennzeichnet, dass** sich eine Längsmittelachse der jeweiligen Spanschraube (16) parallel zu einer Längsmittelachse der Einstellschraube (8) erstreckt.

9. Einstellschraube nach einem der Ansprüche 6 bis 8, **dadurch gekennzeichnet, dass** sich die jeweilige Spanschraube (16) durch Bohrungen (17, 18) in den Abschnitten (13, 14) der jeweilige Einstellschraube (8), welche die Nut (12) derselben axial begrenzen, erstreckt, wobei die Bohrung an einem der Abschnitte als gewindelose Durchgangsbohrung und die Bohrung an dem anderen der Abschnitte als Gewindebohrung ausgeführt ist.

10. Einstellschraube nach einem der Ansprüche 6 bis 9, **dadurch gekennzeichnet, dass** sich die jeweilige Spannschraube (16) durch die Abschnitte (13, 14) der Einstellschraube (8), welche die Nut (12) derselben axial begrenzen, und im Bereich der Nut (12) mit Abstand zu einem Nutgrund (15) der Nut (12) erstreckt.

## Claims

1. A bearing assembly for supporting a rotor (1) in a stationary housing (2),
wherein the bearing assembly comprises a plurality of sliding contact bearing segments (3), which are preferably fastened to the housing (2), wherein each sliding contact bearing segment (3) comprises a sliding contact bearing body (6) which is supported on a sliding contact surface (7) of a component section, preferably on a sliding contact surface (7) of a section of the rotor (1),
wherein, in the region of each sliding contact bearing segment (3), a bearing clearance can be set between the respective sliding contact bearing body (6) and the sliding surface (7) of the respective component section on which the sliding contact bearing body (6) is supported,
**characterised in that** the bearing clearance is adjustable by means of an adjusting screw,
wherein the respective adjusting screw (8) has an external thread (10), via which the respective adjusting screw (8) can be screwed into a recess (9), preferably a recess (9) on the housing side, the respective recess (9) having an internal thread (11),
wherein the respective adjusting screw (8) has a groove (12) on the outer circumference, which groove (12) is bounded on both sides, in the axial direction, by portions (13, 14) of the adjusting screw (8),
wherein at least one clamping screw (16) extends through the portions (13, 14) of the adjusting screw (8) which bound the groove (12) of the latter in the axial direction, and thus also extends through the groove (12), wherein the portions (13, 14) of the adjusting screw (8) which bound the groove (12) of the latter in the axial direction can be clamped via the at least one clamping screw (16), as a result of which the respective adjusting screw (8) can be secured in the respective recess (9).

2. The bearing assembly according to claim 1, **characterised in that** several clamping screws (16) extend through the portions (13, 14) of the respective adjusting screw (8) which axially bound the groove (12) of the latter in the axial direction, and thus also extend through the groove (12).

3. The bearing assembly according to claim 1 or 2, **characterised in that** a longitudinal centre axis of the respective clamping screw (16) extends parallel to a longitudinal centre axis of the respective adjusting screw (8).

4. The bearing assembly according to any one of claims 1 to 3, **characterised in that** the respective clamping screw (16) extends through bores (17, 18) in the portions (13, 14) of the respective adjusting screw (8) which bound the groove (12) of the latter in the axial direction, wherein the bore at one of the portions is provided in the form of a through bore without threads and the bore at the other one of the portions is provided in the form of a threaded bore.

5. The bearing assembly according to any one of the claims 1 to 4, **characterised in that** the respective clamping screw (16) extends through the portions (13, 14) of the adjusting screw (8) which bound the groove (12) of the latter in the axial direction, and extends, in the region of the groove (12), through the groove at a distance from a groove base (15) of the groove (12).

6. An adjusting screw (8) for adjusting the bearing clearance in the region of a sliding contact bearing segment,
wherein the adjusting screw (8) has an external thread (10),
**characterised in that** the respective adjusting screw (8) has a groove (12) on the outer circumference, which groove (12) is bounded on both sides, in the axial direction, by portions (13, 14) of the adjusting screw (8),
wherein at least one clamping screw (16) extends through the portions (13, 14) of the adjusting screw (8) which bound the groove (12) of the latter in the axial direction, and thus also extend through the groove (12), wherein the portions (13, 14) of the adjusting screw (8) which bound the groove (12) of the latter in the axial direction can be clamped via the at least one clamping screw (16).

7. The adjusting screw according to claim 6, **characterised in that** several clamping screws (16) extend through the portions (13, 14) of the adjusting screw (8) which axially bound the groove (12) of the latter in the axial direction, and thus also extend through the groove (12).

8. The adjusting screw according to claim 6 or 7, **characterised in that** a longitudinal centre axis of the respective clamping screw (16) extends parallel to a longitudinal centre axis of the adjusting screw (8).

9. The adjusting screw according to any one of claims 6 to 8, **characterised in that** the respective clamping screw (16) extends through bores (17, 18) in the portions (13, 14) of the respective adjusting screw (8) which bound the groove (12) of the latter in the axial direction, wherein the bore at one of the portions is provided in the form of a through bore without threads and the bore at the other one of the portions is provided in the form of a threaded bore.

10. The adjusting screw according to any one of claims 6 to 9, **characterised in that** the respective clamping screw (16) extends through the portions (13, 14) of the adjusting screw (8) which bound the groove (12) of the latter in the axial direction, and extends, in the region of the groove (12), at a distance from a groove base (15) of the groove (12).

## Revendications

1. Ensemble de paliers pour supporter un rotor (1) dans un boîtier immobile (2),
avec plusieurs segments de palier lisse (3) fixés de préférence sur le boîtier (2), dans lequel chaque segment de palier lisse (3) présente un corps de palier lisse (6), qui prend appui sur une surface de glissement (7) d'une partie de composant de préférence du rotor (1),
dans lequel un jeu de palier entre le corps de palier lisse (6) respectif et la surface de glissement (7) de la partie de composant respective, sur laquelle le corps de palier lisse (6) prend appui, peut être ajusté dans la zone de chaque segment de palier lisse (3),
**caractérisé en ce que** le jeu de palier peut être ajusté par une vis d'ajustement,
dans lequel la vis d'ajustement (8) respective présente un filetage extérieur (10), par l'intermédiaire duquel celle-ci peut être vissée dans un évidement (9) de préférence du côté du boîtier, qui présente un filetage intérieur (11),
dans lequel la vis d'ajustement (8) respective présente sur la périphérie extérieure une rainure (12), qui est délimitée axialement des deux côtés par des parties (13, 14) de la vis d'ajustement (8),
dans lequel s'étend, à travers les parties (13, 14) de la vis d'ajustement (8), lesquelles délimitent axialement la rainure (12) de celle-ci, et ainsi également à travers la rainure (12), au moins une vis de serrage (16), par l'intermédiaire de laquelle les parties (13, 14) de la vis d'ajustement (8), lesquelles délimitent axialement la rainure (12) de celle-ci, peuvent être assemblées par serrage, ce qui permet de bloquer la vis d'ajustement (8) respective dans l'évidement (9) respectif.

2. Ensemble de paliers selon la revendication 1, **caractérisé en ce que** plusieurs vis de serrage (16) s'étendent à travers les parties (13, 14) de la vis d'ajustement (8) respective, lesquelles délimitent axialement la rainure (12) de celle-ci, et ainsi également à travers la rainure (12).

3. Ensemble de paliers selon la revendication 1 ou 2, **caractérisé en ce qu'**un axe central longitudinal de la vis de serrage (16) respective s'étend de manière parallèle par rapport à un axe central longitudinal de la vis d'ajustement (8) respective.

4. Ensemble de paliers selon l'une quelconque des revendications 1 à 3, **caractérisé en ce que** la vis de serrage (16) respective s'étend à travers des alésages (17, 18) dans les parties (13, 14) de la vis d'ajustement (8) respective, lesquelles délimitent axialement la rainure (12) de celle-ci, dans lequel l'alésage est réalisé sur une des parties en tant qu'alésage de passage sans filetage et l'alésage est réalisé sur l'autre des parties en tant qu'alésage fileté.

5. Ensemble de paliers selon l'une quelconque des revendications 1 à 4, **caractérisé en ce que** la vis de serrage (16) respective s'étend à travers les parties (13, 14) de la vis d'ajustement (8), lesquelles délimitent axialement la rainure (12) de celle-ci, et dans la zone de la rainure (12) à travers la rainure à distance d'un fond de rainure (15) de la rainure (12).

6. Vis d'ajustement (8) pour ajuster le jeu de palier dans la zone d'un segment de palier lisse,
dans laquelle la vis d'ajustement (8) présente un filetage extérieur (10),
**caractérisée en ce que**
la vis d'ajustement (8) respective présente sur la périphérie extérieure une rainure (12), qui est délimitée axialement des deux côtés par des parties (13, 14) de la vis d'ajustement (8),
dans laquelle s'étend à travers les parties (13, 14) de la vis d'ajustement (8), lesquelles délimitent axialement la rainure (12) de celle-ci, et ainsi également à travers la rainure (12), au moins une vis de serrage (16), par l'intermédiaire de laquelle les parties (13, 14) de la vis d'ajustement (8), lesquelles délimitent axialement la rainure (12) de celle-ci, peuvent être assemblées par serrage.

7. Vis d'ajustement selon la revendication 6, **caractérisée en ce que** plusieurs vis de serrage (16) s'étendent à travers les parties (13, 14) de la vis d'ajustement (8), lesquelles délimitent axialement la rainure (12) de celle-ci, et ainsi également à travers la rainure (12).

8. Vis d'ajustement selon la revendication 6 ou 7, **caractérisée en ce qu'**un axe central longitudinal de la vis de serrage (16) respective s'étend de manière parallèle par rapport à un axe central longitudinal de la vis d'ajustement (8).

9. Vis d'ajustement selon l'une quelconque des revendications 6 à 8, **caractérisée en ce que** la vis de serrage (16) respective s'étend à travers des alésages (17, 18) dans les parties (13, 14) de la vis d'ajustement (8) respective, lesquelles délimitent axialement la rainure (12) de celle-ci, dans laquelle l'alésage est réalisé sur une des parties en tant qu'alésage de passage sans filetage et l'alésage est réalisé sur l'autre des parties en tant qu'alésage fileté.

10. Vis d'ajustement selon l'une quelconque des revendications 6 à 9, **caractérisée en ce que** la vis de serrage (16) respective s'étend à travers les parties (13, 14) de la vis d'ajustement (8), lesquelles délimitent axialement la rainure (12) de celle-ci, et dans la zone de la rainure (12) à distance d'un fond de rainure (15) de la rainure (12).
